# EUROPEAN PATENT SPECIFICATION

(11) **EP 2 815 133 B1**
(45) Date of publication and mention of the grant of the patent: **17.05.2017**
(21) Application number: 13709953.7
(22) Date of filing: 14.02.2013
(51) Int. Cl.: F15B 11/042, F02B 37/18, F02D 9/10, F02D 41/00, F02D 9/04, F16K 1/22, F16K 1/52

(54) **TURBOCHARGED INTERNAL COMBUSTION PISTON ENGINE COMPRISING A WASTE GATE VALVE ARRANGEMENT AND METHOD OF CONTROLLING GAS FLOW BY-PASSING A TURBINE SECTION OF THE TURBOCHARGER UNIT**
AUFGELADENER KOLBENBRENNKRAFTMASCHINE UMFASSEND EINER WASTE-GATE ANORDNUNG UND VERFAHREN ZUR REGELUNG DES GASFLUSSES BEIM DURCHGANG DURCH EINEN TURBINENABSCHNITT DER TURBOLADEREINHEIT
MOTEUR À PISTON À COMBUSTION INTERNE TURBOCOMPRESSÉ COMPRENANT AGENCEMENT DE SOUPAPES DE DÉCHARGE ET PROCÉDÉ DE RÉGULATION DE FLUX DE GAZ CONTOURNANT UNE SECTION DE TURBINE D'UNE UNITÉ DE TURBOCOMPRESSEUR

(30) Priority: 16.02.2012 FI 20125180
(43) Date of publication of application: 24.12.2014
(73) Proprietor: Wärtsilä Finland Oy, 65380 Vaasa (FI)
(72) Inventor: NYNÄS, Håkan, FI-65280 Vaasa (FI)
(74) Representative: Genip Oy
(86) International application number: PCT/FI2013/050167
(87) International publication number: WO 2013/121111

(56) References cited:
- EP-A1- 1 672 197
- WO-A1-02/086327
- DE-A1-102009 052 285
- DE-U1-202005 021 914
- FR-A1- 2 880 143

## Description

### Technical field

The present invention relates to a valve arrangement for controlling gas flow in a turbocharged internal combustion piston engine comprising at least two parallel valve units.

The present invention relates to a waste gate for a turbocharger unit comprising a valve arrangement and method of controlling gas flow by-passing a turbine section of the turbocharger unit.

### Background art

The operational requirements of combustion engines are becoming more and more demanding and thus the accuracy and reliability of control systems is ever more important. An extremely important fluid flow system in connection with an internal combustion piston engine is the charge air - exhaust gas flow system i.e. the engine gas exchange system. In the efficiently operating internal combustion piston engines, it is almost a rule to use air compressors, typically turbochargers, in connection with the engines. In order to operate the engine properly and efficiently over a wide load range means to control of the gas flow is need at least to some extent. Therefore the turbo charger is often provided with a so called waste gate. The waste gate is a by-pass channel over the turbine part of the turbocharger through which a controllable amount of exhaust gas may be led without performing work in the turbine part. The waste gate is typically provided with a mechanical valve, the opening/closure of which is depending of the charge air pressure or the engine load. The valve is operating in a very harsh environment, where it is exposed to temperatures of several hundreds of Celsius degrees in exhaust gases flowing at very high velocities. Also in transient load stages the control on the turbocharger has considerable impact on the engine performance.

Different kinds of valve systems are disclosed in the following publications.

JP58197429 A shows a valve arrangement for controlling gas flow in a turbocharged internal combustion piston engine comprising at least two parallel valve units, in which a first group of the parallel valve units is provided with a continuously variable flow controlling system. There is also another valve arrangement which is an on-off valve responsive to the rotational speed of the engine, so that when the speed of the engine exceeds its permissible limit the valve opens, and exhaust gas flows to a bypass and supercharge action by an exhaust turbine is stopped.

JP60230514 A shows a waste gate having one valve member which is controlled by an actuator operated by a diaphragm, which is in turn responsive to the compression pressure of the turbocharger. The valve that controls the connection of the compression pressure to the diaphragm operates in response to the pressure. Additionally there is a solenoid valve which is arranged to open the connection of the compression pressure to the diaphragm which causes opening of the waste gate. The solenoid valve is actuated in response to exhaust gas temperature. The valve that controls the connection of the compression pressure to the diaphragm does not control gas flow but transmitting of the pressure effect to the diaphragm.

US4656834 A shows a waste gate valve having one valve member which opens in response to the pressure of the exhaust gas against a bias of a spring. There is also an electronic control means responsive to an electronic control signal which acts as a brake for holding the waste gate valve in its present position.

KR20010061233 A shows a waste gate valve having one valve member. The valve member is controlled by means of inlet air pressure and a vacuum source through a diaphragm.

EP0137282 A2 discloses an EGR -system for controlling the amount of exhaust gas recirculation flow between an exhaust gas conduit and the intake manifold. There is a plurality of solenoid actuated valves situated in a conduit linking the exhaust gas system and the intake manifold. There is also disclosed a method comprising energizing a particular one or group of said solenoid responsive valves in a predetermined order such that the composite flow through said orifices is achieved.

DE102009052285 A1 discloses a digital-hydraulic valve having a plurality of digitally switchable individual valves, which are connected in parallel with respect to a consumer and with at least one equalizing valve for generating intermediate values between the realizable by the digital switchable individual valves opening cross-section stages.

WO02086327 A1 discloses control system and a method for controlling a pressure medium circuit which is arranged for the rate control and/or the position control of an actuator driven by pressurized medium. The pressure medium circuit comprises a first connection between an input port and a first working port, a second connection between an output port and a second working port, and valve means for guiding the volume flow of said connections, which valve means comprise at least a first set and at least a second set of controllable valves coupled in parallel which can be opened and closed.

DE202005021914 U1 discloses a turbocharged internal combustion piston engine comprising a waste gate valve arrangement in the exhaust gas conduit of the engine for controlling exhaust gas flow in the engine, and a control unit arranged to control the operation of the waste gate valve arrangement comprising a group of parallel waste gate valve units.

An object of the invention is to provide a valve arrangement for controlling gas flow in a turbocharged internal combustion piston engine which provides better flow control characteristics and more reliable operation than prior art valve arrangements.

It is also an object of the invention to provide a waste gate for a turbocharger unit for controlling exhaust gas flow in a turbocharged internal combustion piston engine which provides better control characteristics for turbocharger operation and more reliable operation than prior art waste gates.

It is further an object of the invention to provide a method of controlling gas flow by-passing a turbine section of the turbocharger unit which provides better control characteristics for turbocharger operation and more reliable operation than prior art waste gates.

### Disclosure of the Invention

The objects of the invention can be met substantially as is disclosed in the independent claims and in the other claims describing more details of different embodiments of the invention.

A valve arrangement for controlling gas flow in a turbocharged internal combustion piston engine comprising a first group of parallel valve units and a second group of parallel valve units, in which the second group of the parallel valve units comprises at least two valve members and it is provided with digital flow controlling system. It is characteristic to the invention that the first group of the parallel valve units is provided with a continuously variable flow controlling system, and that a control unit is arranged to control the operation of the first and the second group of valve units.

According to an embodiment of the invention a first group of the parallel valve units is provided with a continuously variable valve positioning system and a second group of the parallel valve units are provided with digital valve positioning system.

According to another embodiment of the invention the valve units are arranged into a common valve body.

According to another embodiment of the invention the valve body is a plate-like structure.

According to an embodiment of the invention a valve body of the valve arrangement is arranged between a first connecting member with extending cross sectional area in the gas flow direction and a second connecting member with constricting cross sectional area in the gas flow direction.

According to an embodiment of the invention that the first connecting member and the second connecting member are of identical form.

According to an embodiment of the invention that valve units comprise butterfly valves.

According to an embodiment of the invention that all valve units are of similar size.

According to an embodiment of the invention that the valve units of the second group are of increasing size multiplied in sequence of powers of two.

According to an embodiment of the invention the first group of the parallel valve units consist of one valve unit.

A waste gate for a turbocharger unit comprising a valve arrangement having a first group of parallel valve units and a second group of parallel valve units, in which the second group of the parallel valve units comprises at least two valve members and it is provided with digital flow controlling system and in which the first group of the parallel valve units is provided with a continuously variable flow controlling system, and that a control unit is arranged to control the operation of the first and the second group of valve units.

According to a preferred embodiment of the invention all the valve units of the valve arrangement are arranged to be controlled responsive to a same control signal by the control unit. The same control signal used as control signal for both continuously variable valve positioning system and a digital flow controlling system.

Such a control signal may be based on single measurement value of the engine's operation, or it may be generated by utilizing a number of measurements.

A method of controlling gas flow by-passing a turbine section of the turbocharger unit in which a valve arrangement comprising a first group of parallel valve units and a second group of parallel valve units of three or more parallel valve units is arranged in a conduit connecting an upstream and downstream side of a turbine section, comprising steps of controlling a second group of the valve units comprising at least two parallel valve members in on-off manner, controlling a position of a first group of valve units to have a continuously variable position and the operation of the first and the second group of valve units is controlled by a control unit.

According to an embodiment of the invention after the valve arrangement being totally closed the smallest flow area is controlled by the one valve unit to have a continuously variable position.

According to an embodiment of the invention in case the first group of valve units is 100% open and gas flow by-passing the turbine section is to be increased, at least one of the valve units of the second group is changed to on-state, and the first group of valve units controlled in continuously variable manner to fine tune the total opening area of the valve arrangement.

According to an embodiment of the invention the selection of on-off operated valve units of the second group is performed so that a relative area being nearest lower area to the actual desired relative area is achieved and the a valve unit of the first group is set to a desired position in continuously variable manner to compensate the difference between the nearest lower area and the actual desired relative area.

According to a preferred embodiment of the invention all the valve units of the valve arrangement are controlled responsive to a same control signal. The same control signal used as control signal for both continuously variable valve positioning system and a digital flow controlling system.

According to an embodiment of the invention the first group of valve units is 100% open and gas flow by-passing the turbine section is to be increased, at least one of the valve units of the second group is changed to on-state, and the first group of valve units controlled in continuously variable manner to fine tune the total opening area of the valve arrangement.

A combination of both analogue and digital valves provides a smooth control curve with very few valves. The movement of the analogue valve is bigger and more continuous, which minimizes the risk of sticking.

### Brief Description of Drawings

In the following, the invention will be described with reference to the accompanying exemplary, schematic drawings, in which
Figure 1 illustrates a gas flow system in an internal combustion piston engine according to an embodiment of the invention,
Figure 2 illustrates a valve arrangement according to an embodiment of the invention,
Figure 3 illustrates a method of operating the valve arrangement according to an embodiment of the invention, and
Figure 4 illustrates a method of operating the valve arrangement according to another embodiment of the invention.

### Detailed Description of Drawings

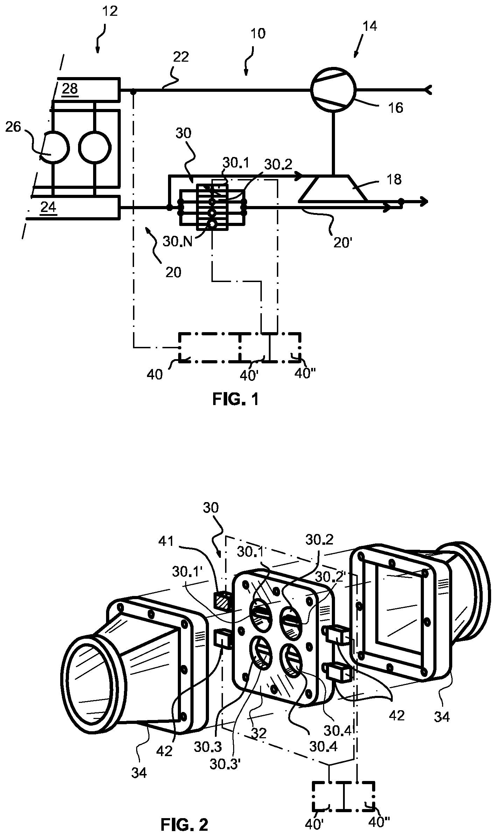

In figure 1 there is schematically shown a gas flow system 10 in an internal combustion piston engine 12 according to an embodiment of the invention. The internal combustion piston engine 12 includes a turbocharger unit 14 with a compressor part 16 and a turbine part 18.

The gas flow system 10 of includes a main gas channel which in this embodiment includes an exhaust gas conduit 20 and an inlet gas conduit 30. The exhaust gas conduit 20 is at its first end in connection with the exhaust manifold 24 of the engine and further with the cylinders 26 of the engine. In the cylinders the pressure and temperature of the exhaust gases is increased by means of combustion of fuel in the cylinders of the engine. The engine is provided with a turbocharger unit 14. The exhaust gas conduit is connected at its second end to the inlet of the turbine part 18 of the turbocharger unit 14 in which turbine part energy of the exhaust gas is partially used for driving the compressor part 16. The compressor part 16 is connected to an inlet manifold 28 of the engine by the inlet gas conduit 30. The turbocharger unit 14 may be of a type known as such. The gas flow system, particularly the turbocharger unit 18 is provided with a bypass channel 20', which connects the engine's exhaust manifold 24 to the outlet side of the turbocharger unit, particularly the turbine part 18 thereof.

The exhaust gas conduit 20 is provided with a valve arrangement 30 for controlling gas flow in the exhaust gas conduit 20 and the gas flow system. The valve arrangement is arranged upstream the turbine part 18. The valve arrangement 30 controls the flow of exhaust gas to the turbine part 18 and/or passing by the turbine part via the bypass channel 20'. Thus the valve arrangement 30 in the embodiment of figure 1 is, and operates as a waste gate of the turbo charger unit 14. The valve arrangement 30 i.e. the waste gate comprises at least two, preferably three or more parallel valve units 30.1, ... 30.N. There is a control unit 40 arranged to control the operation of the valve arrangement. The control unit 40 comprises a continuously variable valve positioning system 40' and a digital flow controlling system 40". Control unit 40 receives one or more measurement value 41 of the engine's operation. According to a preferred embodiment of the invention all the valve units 30.1 ...30.N of the valve arrangement are arranged to be controlled responsive to a same control signal by the control unit 40. The same control signal is used as control signal for both continuously variable valve positioning system 40" and a digital flow controlling system 40'.

Such a control signal may be based on single measurement value of the engine's operation, or it may be generated by utilizing a number of measurements.

Thus a combined state of all valve units of the valve arrangement is a combination of at least two digitally controlled on-off valve units and at least one valve unit controlled in continuously variable manner.

The valve arrangement 30 is provided with at least two groups of parallel valve units in respect to the gas flow. At least one group of the at least two groups is operationally different from the others. According to the invention the first group of the parallel valve units is provided with a continuously variable flow controlling system and a second group of the parallel valve units is provided with digital flow controlling system.

The continuously variable flow controlling system comprises at least one valve member 30.1, 30.1' (fig.2) and a continuously variable valve positioning system 40". The digital flow controlling system comprises at least two valve members 30.2 - 30.N and a digital i.e. on-off valve positioning system 40'.

According to an embodiment of the invention the valve members of the valve units in the first group are physically substantially different to the valve members of the valve units in the second group of the valve units. In this embodiment the continuously variable flow controlling system comprises a continuously variable valve positioning system 40' which provides the continuously variable operation of the valve units. Respectively, the digital flow controlling system 40" comprises a digital i.e. on-off valve positioning system which provides the on-off operation of the valve units. Thus, the valve units are physically substantially identical.

In other words, in this embodiment the valve members of the different groups are substantially different and operation of the valve arrangement is accomplished by different controlling systems or control systems arranged to operate differently.

According to another embodiment of the invention the valve members of the valve units are physically substantially identical and the continuously variable flow controlling system 40" comprises a continuously variable valve positioning system 41 which provides the continuously variable operation of the valve units. Respectively, the digital flow controlling system 40' comprises a digital i.e. on-off valve positioning system 42 which provides the on-off operation of the valve units. In other words, the valve members of different groups are substantially identical and operation of the valve arrangement is accomplished by different controlling systems or control systems arranged to operate differently.

In figure 2 there is shown an embodiment of the valve arrangement 30 according to an invention which is provided with four valve units 30.1, 30.2, 30.3, 30.4 with valve members therein arranged into a common valve body 32, which is a plate-like structure. The valve members 30.1' - 30.4' are all of disk-valve i.e butterfly type. Additionally in the valve arrangement 30 of figure 2 the valve members of the valve units are physically substantially identical. The butterfly type valve solves the problem of the valves hitting the valve seats such as may be the case with poppet valves. A multi-valve butterfly valve system gives a better control compared to one single big valve.

Valve body 32 is attached between a first and a second connecting member 34, 34' by means of which the valve body may be connected to the exhaust gas conduit 20 of the engine. The connecting members 34, 34' are preferably identical at both sides of the valve body 32 which is advantageous in manufacturing point of view. According to the embodiment shown in figure 2 the valve body 32 is arranged between a first connecting member with extending cross sectional area in the gas flow direction and a second connecting member with constricting cross sectional area in the gas flow direction. Thus the connecting members 34, 34' are also transitions members to connect the rectangular valve body to circular exhaust gas conduit 20.

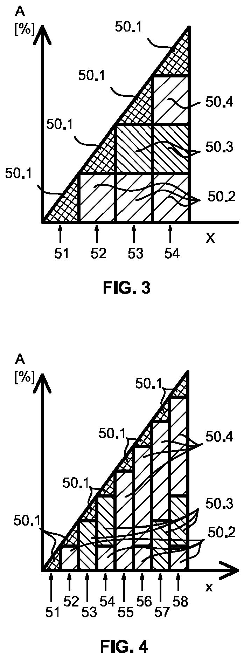

Figure 3 describes a method of operating the valve arrangement according to an embodiment of the invention. The vertical axis represents relative total opening A of the valve arrangement 30 and the horizontal axis X represents conditions of the valve units. The condition illustrated by reference 51 stands for a situation where all the valve units of the second group are closed. The area 50.1 shows that adjustment of the relative opening between 0 - 25% is practised by the valve unit of the first group in continuously variable manner. In case the open area is desired to be more than 25%, but less than 50%, one valve unit of the second group is fully opened and the valve unit of the first group is closed or set to a desired position in continuously variable manner. This condition is illustrated by the reference 52. Again, the area 50.1 shows that adjustment of the relative opening between 25 - 50% and the area 50.2 shows the fully opened state of the valve unit of a second group. In case an increase the open area is desired to be 50% - 75%, one more valve unit of the second group is fully opened and the valve unit of the first group is closed or set to a desired position in continuously variable manner. This condition is illustrated by the reference 53. Again, the area 50.1 shows that adjustment of the relative opening between 50-75% and the area 50.2 shows the fully opened state of the first valve unit of a second group, and further the area 50.3 shows the fully opened state of the second valve unit of the second group. Moreover, in case an increase the open area is desired to be more than 75% one more valve unit of the second group is fully opened and the valve unit of the first group is closed or set to a desired position in continuously variable manner. This condition is illustrated by the reference 54. Again, the area 50.1 shows that adjustment of the relative opening between 75-100% and the area 50.2 shows the fully opened state of the valve unit of a second group, and the area 50.3 shows the fully opened state of the second valve unit of the second group, and further the area 50.4 shows the fully opened state of the third valve unit of the second group.

Thus, in the method the selection of on-off operated valve units of the second group is performed so that a relative area being nearest lower area to the actual desired relative area is achieved and the a valve unit of the first group is set to a desired position in continuously variable manner to compensate the difference between the nearest lower area and the actual desired relative area. A total state or a combined state of all valve units of the valve arrangement is a combination of at least two digitally controlled on-off valve units and at least one valve unit controlled in continuously variable manner.

In the figure 3 the valve units of the second group are of identical form.

In the figure 4 the valve units of the second group are of increasing multiplied in sequence of powers of two i.e. having relative areas of 100%, 200%, 400%, etc. Figure 4 describes a method of operating the valve arrangement according to another embodiment of the invention. The vertical axis represents relative total opening of the valve arrangement 30 and the horizontal axis X represents conditions of the valve units. The condition illustrated by reference 51 stands for a situation where all the valve units of the second group are closed. The area 50.1 shows that adjustment of the relative opening between 0 - 12,5% is practised by the valve unit of the first group in continuously variable manner. In case an increase the open area is desired to be more than 12,5%, but less than 25%, a first valve unit of the second group is fully opened and the valve unit of the first group is closed or set to a desired position in continuously variable manner. This condition is illustrated by the reference 52. The area 50.2 shows the fully opened state of the first valve unit of a second group. In case an increase the open area is desired to be more than 25% a second valve unit of the second group is fully opened and the first valve unit of the second group is closed, and the valve unit of the first group is closed or set to a desired position in continuously variable manner. This condition is illustrated by the reference 53. Again, the area 50.1 shows that adjustment of the relative opening between 25%- 37,5% and the area 50.3 shows the fully opened state of the second valve unit of a second group.

In case an increase the open area is desired to be 35,5% - 50% the second valve unit of the second group is remained open and a the first valve unit of the second group is fully opened , and the valve unit of the first group is closed or set to a desired position in continuously variable manner. This condition is illustrated by the reference 54.

Respectively, in case an increase the open area is desired to be 50% - 62,5% the first and the second valve units of the second group are closed and a third valve unit of the second group is fully opened, and the valve unit of the first group is closed or set to a desired position in continuously variable manner. This condition is illustrated by the reference 55. Again, the area 50.1 shows that adjustment of the relative opening between 50- 62,5%.

Further, in case an increase the open area is desired to be 62,5% - 75% the only first and the third valve units of the second group are set fully open, and the valve unit of the first group is closed or set to a desired position in continuously variable manner. This condition is illustrated by the reference 56. Again, the area 50.1 shows that adjustment of the relative opening between 62,5%- 75%.

Further, the open area of 75% - 87,5% is accomplished be setting only the second and the third valve units of the second group fully open, and the valve unit of the first group is closed or set to a desired position in continuously variable manner. This condition is illustrated by the reference 57. The open area of 87,5% - 100% is accomplished be setting the first, the second and the third valve units of the second group fully open, and the valve unit of the first group is closed or set to a desired position in continuously variable manner. This condition is illustrated by the reference 58.

Thus also in this embodiment the selection of fully opened valve units of the second group is performed so that a relative area being nearest lower one to the actual desired relative area is achieved and the a valve unit of the first group is set to a desired position in continuously variable manner to compensate the difference between the nearest lower area and the actual desired relative area. A total state or a combined state of all valve units of the valve arrangement is a combination of at least two digitally controlled on-off valve units and at least one valve unit controlled in continuously variable manner.

Basically the smallest area is adjusted by an analogue valve. After its capacity is not enough is the first digital step opened. In other words, the required fine tuning of the opening area is done by the analogue valve.

While the invention has been described herein by means of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The coupling of the valve arrangement to the gas flow system may be mad to a different location and/or different way. The details mentioned in connection with any embodiment above may be used in connection with another embodiment when such combination is technically feasible.

## Claims

1. A turbocharged internal combustion piston engine (12) comprising a waste gate valve arrangement (30) in the exhaust gas conduit (2) of the engine (12) for controlling exhaust gas flow in the engine (12), and a control unit (40) arranged to control the operation of the waste gate valve arrangement (30) comprising a group of parallel waste gate valve units (30.1-30.N), **characterized in that** a first group of the waste gate valve units is connected to a continuously variable flow controlling system (40"), and a second group of the waste gate valve units is connected to a digital flow controlling system (40'), and that all the valve units (30.1 ...30.N) of the valve arrangement are arranged to be controlled responsive to a same control signal obtained from the engine by the control unit (40) for controlling the flow of exhaust gas to a turbine part (18) and/or passing by the turbine part via a bypass channel (20').

2. A turbocharged internal combustion piston engine according to claim 1, **characterized in that** the waste gate valve units are arranged into a common valve body (32).

3. A turbocharged internal combustion piston engine according to claim 2, **characterized in that** valve body (32) is a plate-like structure.

4. A turbocharged internal combustion piston engine according to claim 2, **characterized in that** valve body (32) is arranged between a first connecting member (34) with extending cross sectional area in the gas flow direction and a second connecting member (34') with constricting cross sectional area in the gas flow direction.

5. A turbocharged internal combustion piston engine according to claim 4, **characterized in that** the first connecting member (34) and the second connecting member (34') are of identical form.

6. A turbocharged internal combustion piston engine according to anyone of the preceding claims, **characterized in that** waste gate valve units (30.1 ...30.N) are identical.

7. A turbocharged internal combustion piston engine according to anyone of the preceding claims 1-6, **characterized in that** the waste gate valve units of the second group are of increasing area multiplied in sequence of powers of two.

8. A turbocharged internal combustion piston engine according to claim 1, **characterized in that** the first group of the parallel waste gate valve units consist of one valve unit (30.1).

9. Method of controlling exhaust gas flow by-passing a turbine section of the turbocharger unit (14) in which a waste gate valve arrangement comprising a first group of parallel waste gate valve units (30.1) and a second group of parallel waste gate valve units (30.2 ...30.N) is arranged in a conduit connecting an upstream and downstream side of a turbine section, comprising steps of controlling a second group of the waste gate valve units in on-off manner (40'), **characterized by** steps of controlling a position of a first group of waste gate valve units to have a continuously variable position (40') and that the operation of the first and the second group of waste gate valve units (30) is controlled by a control unit (40), and all the waste gate valve units are controlled responsive to a same control signal by the control unit (40) so that the same control signal used as control signal for both continuously variable valve positioning system (40") and a digital flow controlling system (40') and controlling the flow of exhaust gas to a turbine part (18) and/or passing by the turbine part via a bypass channel (20').

10. Method according to claim 9, **characterized in that** the control signal may be based on single measurement value of the engine's operation, or it may be generated by utilizing a number of measurements.

11. Method according to claim 9, **characterized in that** the smallest flow area is controlled by one waste gate valve unit to have a continuously variable position.

12. Method according to claim 9, **characterized in that** in case the first group of waste gate valve units is 100% open and gas flow by-passing the turbine part (18) is to be increased, at least one of the waste gate valve units of the second group is changed to on-state, and the first group of waste gate valve units controlled in continuously variable manner to fine tune the total opening area of the valve arrangement.

13. Method according to claim 9, **characterized in that** the method the selection of on-off operated waste gate valve units of the second group is performed so that a relative area being nearest lower area to the actual desired relative area is achieved and the a waste gate valve unit of the first group is set to a desired position in continuously variable manner to compensate the difference between the nearest lower area and the actual desired relative area.

## Patentansprüche

1. Turboaufgeladener Kolbenverbrennungsmotor (12), eine Wastegate-Ventilanordnung (30) in der Abgasleitung (2) des Motors (12) zum Steuern des Abgasstromes im Motor (12) und eine Steuereinheit (40) umfassend, die dafür angeordnet ist, den Betrieb der Wastegate-Ventilanordnung (30) zu steuern, welche eine Gruppe paralleler Wastegate-Ventileinheiten (30.1-30.N) umfasst, **dadurch gekennzeichnet, dass** eine erste Gruppe der Wastegate-Ventileinheiten mit einem stufenlosen Strömungssteuersystem (40") verbunden ist und eine zweite Gruppe von Wastegate-Ventileinheiten mit einem digitalen Strömungssteuersystem (40') verbunden ist und dass alle Ventileinheiten (30.1...30.N) der Ventilanordnung dafür angeordnet sind, in Reaktion auf das gleiche Steuersignal gesteuert zu werden, das von der Steuereinheit (40) aus dem Motor erzielt wird, um den Abgasstrom zu einem Turbinenteil (18) und/oder das Umgehen des Turbinenteils mittels eines Bypass-Kanals (20') zu steuern.

2. Turboaufgeladener Kolbenverbrennungsmotor nach Anspruch 1, **dadurch gekennzeichnet, dass** die Wastegate-Ventileinheiten zu einem gemeinsamen Ventilkörper (32) angeordnet sind.

3. Turboaufgeladener Kolbenverbrennungsmotor nach Anspruch 2, **dadurch gekennzeichnet, dass** der Ventilkörper (32) eine plattenähnliche Struktur ist.

4. Turboaufgeladener Kolbenverbrennungsmotor nach Anspruch 2, **dadurch gekennzeichnet, dass** der Ventilkörper (32) zwischen einem ersten Verbindungselement (34) mit sich erweiternder Querschnittsfläche in Gasströmungsrichtung und einem zweiten Verbindungselement (34') mit sich einengender Querschnittsfläche in der Gasströmungsrichtung angeordnet ist.

5. Turboaufgeladener Kolbenverbrennungsmotor nach Anspruch 4, **dadurch gekennzeichnet, dass** das erste Verbindungselement (34) und das zweite Verbindungselement (34') von identischer Form sind.

6. Turboaufgeladener Kolbenverbrennungsmotor nach einem der vorhergehenden Ansprüche, **dadurch gekennzeichnet, dass** die Wastegate-Ventileinheiten (30.1 ... 30.N) identisch sind.

7. Turboaufgeladener Kolbenverbrennungsmotor nach einem der vorhergehenden Ansprüche 1 - 6, **dadurch gekennzeichnet, dass** die Wastegate-Ventileinheiten der zweiten Gruppe von zunehmender Fläche sind, multipliziert in Folge von Zweierpotenzen.

8. Turboaufgeladener Kolbenverbrennungsmotor nach Anspruch 1, **dadurch gekennzeichnet, dass** die erste Gruppe der parallelen Wastegate-Ventileinheiten aus einer Ventileinheit (30.1) besteht.

9. Verfahren zum Steuern eines Abgasstromes, der einen Turbinenabschnitt der Turboladereinheit (14) umgeht, wobei eine Wastegate-Ventilanordnung, die eine erste Gruppe paralleler Wastegate-Ventileinheiten (30.1) und eine zweite Gruppe paralleler Wastegate-Ventileinheiten (30.2...30.N) umfasst, in einer Leitung angeordnet ist, welche die prozessaufwärtige und die prozessabwärtige Seite eines Turbinenabschnitts verbindet, umfassend die Schritte des Steuerns einer zweiten Gruppe von Wastegate-Ventileinheiten in einer An-Aus-Weise (40'), **gekennzeichnet durch** Schritte des Steuerns der Position einer ersten Gruppe von Wastegate-Ventileinheiten derart, dass sie eine stufenlos variable Position (40') aufweisen, und **dadurch**, dass der Betrieb der ersten und der zweiten Gruppe von Wastegate-Ventileinheiten (30) von einer Steuereinheit (40) gesteuert wird und dass alle Wastegate-Ventileinheiten in Reaktion auf das gleiche Steuersignal von der Steuereinheit (40) gesteuert werden, so dass das gleiche Steuersignal als Steuersignal sowohl für das stufenlose Ventilpositionierungssystem (40") als auch ein digitales Strömungssteuersystem (40') verwendet und der Abgasstrom zu einem Turbinenteil (18) und/oder das Umgehen des Turbinenteils mittels eines Bypass-Kanals (20') gesteuert wird.

10. Verfahren nach Anspruch 9, **dadurch gekennzeichnet, dass** das Steuersignal auf einem einzelnen Messwert des Motorbetriebes basieren oder es unter Verwendung einer Anzahl von Messwerten erzeugt werden kann.

11. Verfahren nach Anspruch 9, **dadurch gekennzeichnet, dass** die kleinste Strömungsfläche von einer Wastegate-Ventileinheit derart gesteuert wird, dass sie eine stufenlos variable Position aufweist.

12. Verfahren nach Anspruch 9, **dadurch gekennzeichnet, dass**, wenn die erste Gruppe Wastegate-Ventileinheiten zu 100 % geöffnet ist und der den Turbinenteil (18) umgehende Gasstrom vergrößert werden soll, mindestens eine der Wastegate-Ventileinheiten der zweiten Gruppe in einen An-Zustand versetzt wird und die erste Gruppe von Wastegate-Ventileinheiten für die Feinabstimmung der Gesamtöffnungsfläche der Ventilanordnung in stufenloser Weise gesteuert wird.

13. Verfahren nach Anspruch 9, **dadurch gekennzeichnet, dass** bei dem Verfahren die Auswahl von an-aus-betriebenen Wastegate-Ventileinheiten der zweiten Gruppe derart ausgeführt wird, dass eine relative Fläche erzielt wird, welche zur tatsächlich gewünschten relativen Fläche die nächstkleinere ist, und die Wastegate-Ventileinheit der ersten Gruppe in stufenloser Weise in eine gewünschte Position gestellt wird, um den Unterschied zwischen der nächstkleineren Fläche und der tatsächlich gewünschten relativen Fläche ist.

## Revendications

1. Moteur à piston à combustion interne turbocompressé (12) comprenant un système de soupapes de décharge (30) dans le conduit de gaz d'échappement (2) du moteur (12) pour contrôler le flux de gaz d'échappement du moteur (12), et une unité de commande (40) conçue pour commander le fonctionnement du système de soupapes de décharge (30) comprenant un groupe d'unités de soupape de décharge parallèles (30.1-30.N), **caractérisé en ce qu'**un premier groupe des unités de soupape de décharge est raccordé à un système de commande de flux à variation continue (40"), et un deuxième groupe des unités de soupape de décharge est raccordé à un système de commande de flux numérique (40'), et **en ce que** toutes les unités de soupape (30.1 ... 30.N) du système de soupapes sont conçues pour être commandées en réponse à un même signal de commande obtenu à partir du moteur par l'unité de commande (40) pour commander le flux de gaz d'échappement allant vers une partie de turbine (18) et/ou contournant la partie de turbine par le biais d'un canal de dérivation (20').

2. Moteur à piston à combustion interne turbocompressé selon la revendication 1, **caractérisé en ce que** les unités de soupape de décharge sont disposées dans un corps de soupapes commun (32).

3. Moteur à piston à combustion interne turbocompressé selon la revendication 2, **caractérisé en ce que** le corps de soupapes (32) est une structure du genre plaque.

4. Moteur à piston à combustion interne turbocompressé selon la revendication 2, **caractérisé en ce que** le corps de soupapes (32) est disposé entre un premier élément de connexion (34) présentant une section transversale s'étendant dans la direction du flux de gaz et un deuxième élément de connexion (34') présentant une section transversale de constriction dans la direction du flux de gaz.

5. Moteur à piston à combustion interne turbocompressé selon la revendication 4, **caractérisé en ce que** le premier élément de connexion (34) et le deuxième élément de connexion (34') présentant une forme identique.

6. Moteur à piston à combustion interne turbocompressé selon l'une quelconque des revendications précédentes, **caractérisé en ce que** les unités de soupape de décharge (30.1 ... 30.N) sont identiques.

7. Moteur à piston à combustion interne turbocompressé selon l'une quelconque des revendications 1 - 6, **caractérisé en ce que** les unités de soupape de décharge du deuxième groupe présentant une section croissante multipliée en séquence de puissance de deux.

8. Moteur à piston à combustion interne turbocompressé selon la revendication 1, **caractérisé en ce que** le premier groupe d'unités de soupape de décharge parallèles consiste en une unité de soupape (30.1).

9. Procédé de commande d'un flux de gaz d'échappement contournant une section de turbine de l'unité de turbocompresseur (14), dans laquelle un système de soupapes de décharge comprenant un premier groupe d'unités de soupape de décharge parallèles (30.1) et un deuxième groupe d'unités de soupape de décharge parallèles (30.2 ... 30.N) est disposé dans un conduit reliant un côté amont et un côté aval d'une section de turbine, comprenant les étapes de commande d'un deuxième groupe d'unités de soupape de décharge d'une manière marche-arrêt (40'), **caractérisé par** les étapes de commande d'une position d'un premier groupe d'unités de soupape de décharge de manière à obtenir une position à variation continue (40') et en ce que le fonctionnement des premier et deuxième groupes d'unités de soupape de décharge (30) est commandé par une unité de commande (40), et toutes les unités de soupape de décharge sont commandées en réponse à un même signal de commande par l'unité de commande (40), de telle façon que le même signal de commande est utilisé comme signal de commande à la fois pour un système de positionnement de soupape à variation continue (40") et un système de commande de flux numérique (40'), et de commande du flux de gaz d'échappement vers une partie de turbine (18) et/ou contournant la partie de turbine par le biais d'un canal de dérivation (20').

10. Procédé selon la revendication 9, **caractérisé en ce que** le signal de commande peut être basé sur une valeur de mesure unique du fonctionnement du moteur, ou peut être généré à l'aide d'un certain nombre de mesures.

11. Procédé selon la revendication 9, **caractérisé en ce que** la plus petite section d'écoulement est commandée par une unité de soupape de décharge de manière à avoir une position à variation continue.

12. Procédé selon la revendication 9, **caractérisé en ce que** lorsque le premier groupe d'unités de soupape de décharge est ouvert à 100 % et que le flux de gaz contournant la partie de turbine (18) doit être augmenté, au moins l'une des unités de soupape de décharge du deuxième groupe est mise dans un état de marche, et le premier groupe d'unités de soupape de décharge est commandé de manière continuellement variable pour régler avec précision la section d'ouverture totale du système de soupapes.

13. Procédé selon la revendication 9, **caractérisé en ce que** la sélection d'unités de soupape de décharge commandées par marche-arrêt du deuxième groupe est réalisée de manière à obtenir une section relative étant la section basse la plus proche de la section relative souhaitée réelle, et l'unité de soupape de décharge du premier groupe est réglée à une position souhaitée d'une manière variable en continu pour compenser la différence entre la section basse la plus proche et la section relative souhaitée réelle.
